Europäisches Patentamt

European Patent Office

Office européen des brevets

(19)

(11) Publication number: 0 507 150 A2

# EUROPEAN PATENT APPLICATION

(12)

(21) Application number: 92104718.9

(22) Date of filing: 18.03.92

(51) Int. Cl.5: G05B 19/05, G05B 19/04

(30) Priority: 22.03.91 IT BS910031
23.12.91 IT MI913452

(43) Date of publication of application:
07.10.92 Bulletin 92/41

(84) Designated Contracting States:
AT BE CH DE DK ES FR GB GR IT LI LU MC
NL PT SE

(71) Applicant: NISVA S.r.l.
Via Dell'Artigianato, 2
I-25040 Cividate Camuno (Brescia)(IT)

(72) Inventor: Zaglio, Enrico
Via N. Tommaseo, 34
I-25100 Brescia(IT)

(74) Representative: Modiano, Guido et al
c/o Modiano & Associati S.r.l. Via Meravigli,
16
I-20123 Milano(IT)

(54) Control and power supply plant, particularly for fluid actuators and the like.

(57) Supply and control unit particularly for fluid actuators and the like, the peculiarity whereof consists of the fact that it comprises a control unit having outputs which are connected to interfacing means which are connected to a single means for conveying control signals and fluids toward hydraulic actuators which is defined by means of the tube or tubes in which the fluid flows. The hydraulic actuators are operatively connected to receiving and decoding means connected to the conveyance means. The receiving and decoding means drive at least one electric or solenoid valve for the adjustment of the hydraulic actuators.

FIg.1

The present invention relates to a control and power supply plant, and in particular to a supply and control system, particularly for fluid actuators and the like.

As is known, in machines or devices provided with fluid actuators, such as cylinder-and-piston units, it is necessary to have remote controls in order to select the electric or solenoid valve or valves for controlling one or more hydraulic actuators, according to the operation or operations to be performed.

Furthermore, currently manufactured systems are provided with a plurality of connecting tubes between a pressurized fluid source and each fluid actuator. The drawback of fluid systems of this kind is essentially related to their great complexity and bulk required for their installation.

Their complexity is linked to the number of tubes or ducts for conveying the fluid from the source to each actuator, which obviously requires the intervention of a hydraulic specialist, and to the number of electrical connections required to supply power to each electric valve on one hand and, on the other hand, to the need to connect each electric valve to a control unit which activates the various actuators according to preset sequences. Installation of the electric power supply and control system furthermore requires the intervention of a second operator specialized in electric and data-transmission systems.

The aim of the present invention is to eliminate or substantially reduce the drawbacks described above by providing a supply and control system particularly for fluid actuators and the like which has reduced size and decreased complexity.

Within the scope of the above aim, an object of the present invention is to provide a system which requires the intervention of a single operator for its installation.

Not least object of the present invention is to provide a system which is highly reliable, and relatively easy to execute at competitive costs.

This aim, the objects mentioned and others which will become apparent hereinafter are achieved by a supply and control system particularly for fluid actuators and the like, characterized in that it comprises a control unit the outputs whereof are connected to interfacing means which are connected to means for conveying control signals and fluids toward hydraulic actuators, said hydraulic actuators being operatively connected to receiving and decoding means connected to said conveyance means, said receiving and decoding means being adapted for driving at least one electric or solenoid valve for the adjustment of said fluid actuators.

Further characteristics and advantages of the invention will become apparent from the description of a preferred but not exclusive embodiment of a supply and control system particularly for fluid actuators and the like, according to the invention, illustrated only by way of non-limitative example in the accompanying drawings, wherein:

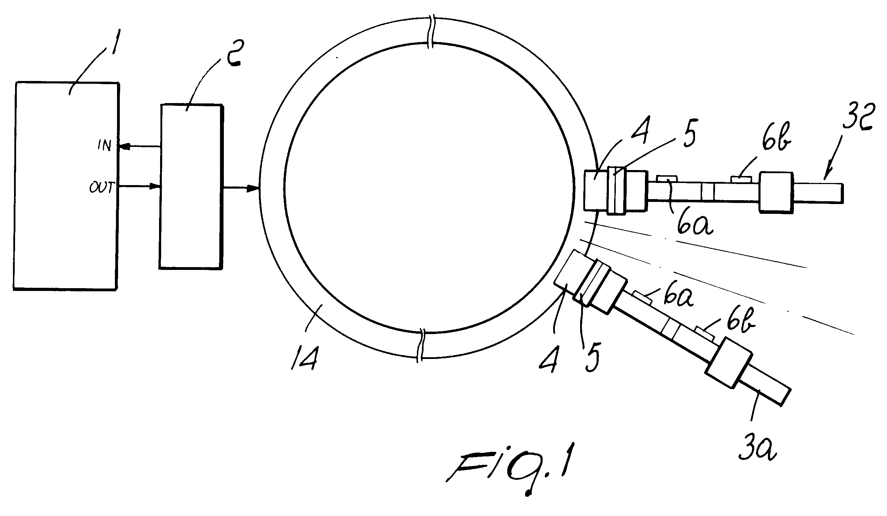

figure 1 is a schematic plan view of a system according to the invention;

figure 2 is a perspective view of a first embodiment of the conveyance means;

figure 3 is a perspective view of a second embodiment of the conveyance means;

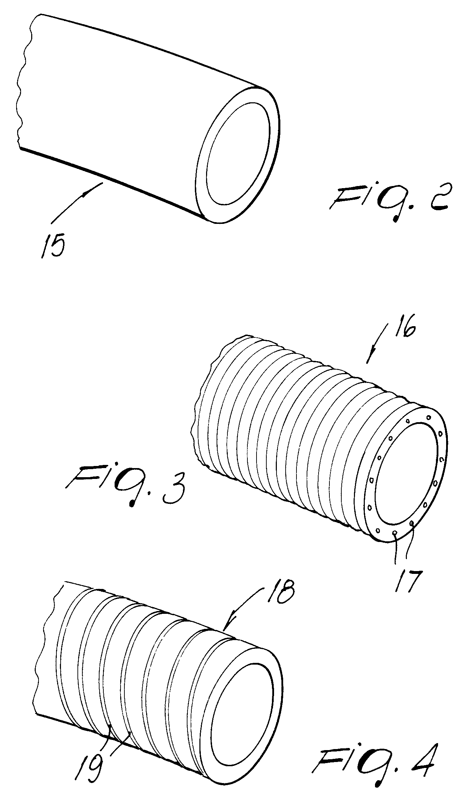

figure 4 is a perspective view of a third embodiment of the conveyance means;

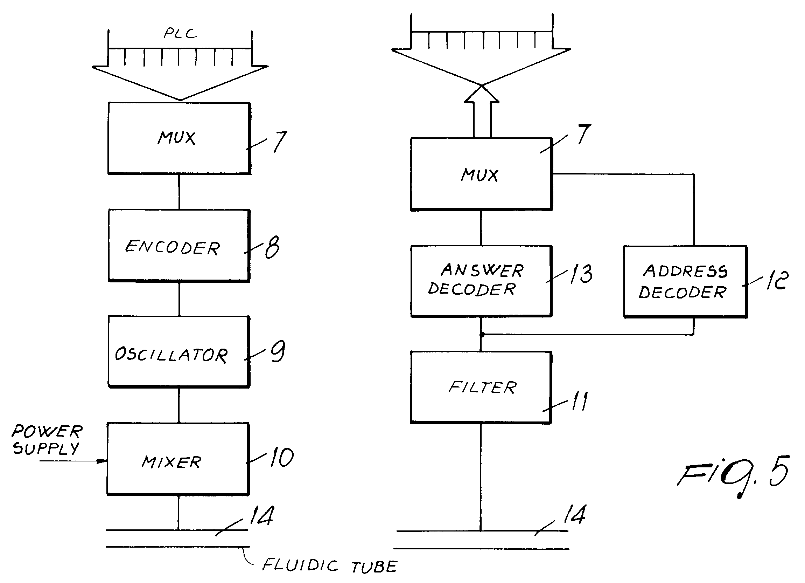

figure 5 is a block diagram of the interfacing means; and

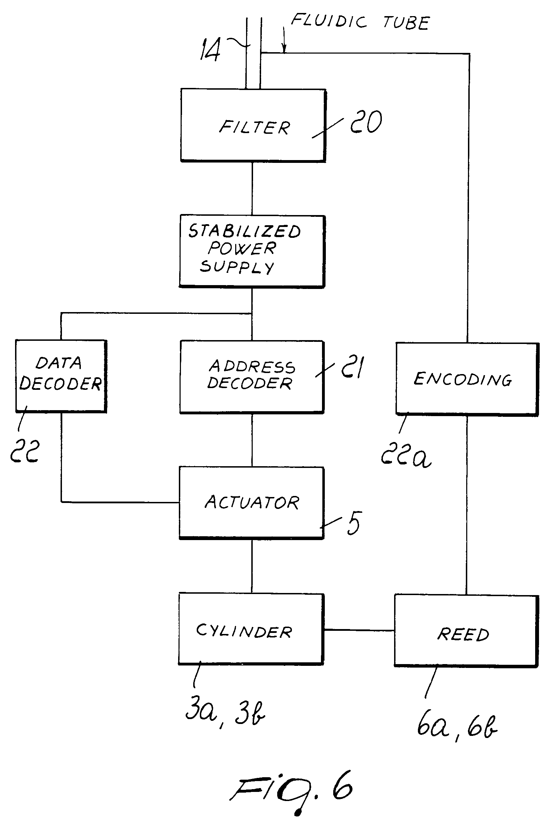

figure 6 is a block diagram of the receiving and decoding means.

With reference to the above figures, the supply and control system particularly for fluid actuators and the like comprises a control unit, indicated by the reference numeral 1, usually of the PLC type (PLC being the acronym of "programmable logic control"), having multiple outputs which are connected to interfacing means, indicated by the reference numeral 2, which are connected to means for conveying actuation signals and fluids toward hydraulic actuators which are indicated by the reference numerals 3a to 3z.

The hydraulic actuators 3a to 3z, usually cylinder-and-piston units, are operatively connected to receiving and decoding means, indicated by the reference numeral 4, which are electrically connected to the conveyance means.

The receiving and decoding means 4 drive at least one electric valve 5 for the adjustment of the respective hydraulic actuator 3a to 3z. Each hydraulic actuator 3a to 3z furthermore has a pair of Reed bulbs 6a and 6b which are arranged on its surface and feedback the position of the piston arranged in the cylinder, to the receiving and decoding means 4.

The interfacing means 2 comprise an interface, indicated by the same reference numeral, which has a plurality of inputs 1a to 1z arriving from the control unit 1, and which encodes said inputs, preparing them with an address which identifies one of the hydraulic actuators 3a to 3z and with a command which the receiving and decoding means 4 must perform on the electric valve 5.

The input signals thus encoded are converted into a plurality of output signals which can be sent on a single output to the conveyance means.

The interface 2 furthermore receives from the conveyance means answer signals which arrive from the receiving and decoding means 4 to decode them and send them to one of the inputs of the control unit 1.

For transmission, the interface 2 can have, for example, a multiplexer 7, to which the inputs 1a to 1z are connected, which selects said inputs according to a selection law of the multiplexer itself. Then the signal is encoded in the encoder 8, which transmits the encoded signal to an oscillator 9 which modulates it according to a preset rule. Finally, the modulated signal is mixed in the mixer 10 with a direct-current power supply, producing a signal which is transmitted over the conveyance means.

For reception, the interface 2 can have a filter 11 which draws from the conveyance means an answer signal, generated by the receiving and decoding means 4, and extracts the significant part thereof, i.e. a modulated signal, excluding its power supply part and demodulating it. The demodulated signal is then decoded by an address decoder 12 and by an answer encoder 13, generating an address, i.e. an identifier of one of the inputs 1a to 1z, and an answer code, which is returned to the control unit 1 by means of the multiplexer 7, connected to the input selected by the address generated by the address decoder 12.

The conveyance means comprise a fluid duct 14 which simultaneously conveys the driving fluid for the hydraulic actuators 3a to 3z and control signals for the receiving and decoding means 4 and for the interfacing means 2. The fluid duct 14 is electrically connected to the interface 2 and to the receiving and decoding means 4.

The fluid duct 14 can comprise a metallic tube 15, see figure 2, or a flexible hose 16 which comprises a supporting reinforcement 17, see figure 3, or a flexible hose 18 on which at least one electric conductor 19 is coiled in a spiral. The fluid duct 14 is furthermore connected to a pressurized fluid tank which is not illustrated since it is of a per se known type.

Each of the receiving and decoding means 4 comprises an input filter 20 which breaks up a received signal into respective power-supply and control-signal components. The control signal is decoded in a decoder 21, and the signal portion thereof dedicated to the address of the appropriate hydraulic actuator 3a to 3z is recognized in order to actuate the electric valve or valves 5.

The receiving and decoding means 4 furthermore answer the follow-up from the control unit 1 by encoding with an encoder 22a the signal which arrives from the Reed bulbs 6a and 6b.

Advantageously, the use of the interface 2, of the single fluid duct 14 and of the receiving means 4 allows to reduce, in an easily understandable manner, the complexity of the installation of the system according to the invention, eliminating the connecting tubes between each individual actuator and a single respective control electric valve, minimizing the number of electric cables for connection between the control unit 1 and the individual electric valves 5.

Furthermore, conveniently, during assembly each unit of the system according to the invention can be assembled, for example, by a hydraulic specialist, without also requiring the intervention of the electrician for its installation on the machine in the factory where this system is required.

Finally, advantageously, the use of interfaces 2 and 4 also allows to minimize the electrical complexity for running the outputs of the control unit 1, i.e. it eliminates all electric cables for connection between the system and the control unit, except for those possibly coiled on the duct 14.

Practical tests have shown that the supply and control system according to the present invention achieves the intended aim and objects, providing an alternative to known fluid systems which is absolutely competitive, especially from the point of view of complexity and bulk inside the possible machines.

The invention thus conceived is susceptible to numerous modifications and variations, all of which are within the scope of the inventive concept. Furthermore, all the details are replaceable by other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Supply and control system particularly for fluid actuators and the like, characterized in that it comprises a control unit having outputs which are connected to interfacing means which are connected to means for conveying control signals and fluids toward hydraulic actuators, said hydraulic actuators being operatively connected to receiving and decoding means which are connected to said conveyance means, said receiving and decoding means being adapted for driving at least one electric or solenoid valve for adjusting said hydraulic actuators.

2. Supply and control system particularly for hydraulic actuators and the like, characterized in that it comprises means for conveying control signals and fluids which are connected, upstream, to a control unit through interfacing means suitable for encoding control signals arriving from said control unit, and is connected, downstream, to hydraulic actuators, each of which comprises means for receiving and decoding said signals, said receiving and decoding means being suitable for driving at least one electric valve for adjusting a respective hydraulic actuator.

3. System according to claim 2, characterized in that said interfacing means comprise an interface having a plurality of inputs which arrive from said control unit and is adapted for encoding said plurality of inputs into a plurality of encoded outputs which can be sent on a single output to said conveyance means, said interface being furthermore adapted for receiving from said conveyance means answer signals arriving from said receiving and decoding means in order to decode them and send them to one of the inputs of said control unit.

4. System according to the preceding claims, characterized in that said conveyance means comprise a fluid duct which is adapted for conveying driving fluid for said hydraulic actuators and control signals for said receiving and decoding means and for said interfacing means, said fluid duct being connected to said interface and to said receiving and decoding means.

5. System according to claim 4, characterized in that said fluid duct comprises a metallic piping connected to a tank of pressurized fluid.

6. System according to claim 4, characterized in that said fluid duct comprises a flexible hose connected to a fluid tank and having a metallic reinforcement.

7. System according to claim 4, characterized in that said fluid duct comprises a flexible hose connected to a fluid tank on which at least one electric conductor is coiled in a spiral.

8. System according to one or more of the preceding claims, characterized in that said receiving and decoding means comprise an input filter which is adapted for breaking up a received signal into respective power-supply and control-signal components, said control signal being decoded and recognized in order to control each electric valve, said receiving means being suitable for answering said received signal signaling to said control unit the execution of said command.

9. System according to one or more of the preceding claims, characterized in that said hydraulic actuators comprise at least one cylinder-and-piston unit.

Fig.1

EP 0 507 150 A2

Fig. 2

15

Fig. 3

16

17

Fig. 4

18

19

PLC

MUX 7

ENCODER 8

OSCILLATOR 9

POWER SUPPLY → MIXER 10

14

FLUIDIC TUBE

MUX 7

ANSWER DECODER 13          ADDRESS DECODER 12

FILTER 11

14

Fig. 5

FLUIDIC TUBE

14

FILTER   20

STABILIZED POWER SUPPLY

DATA DECODER

22

ADDRESS DECODER   21

ENCODING

22a

ACTUATOR

5

CYLINDER

3a, 3b

REED

6a, 6b

Fig. 6